# FASCICULE DE BREVET EUROPEEN

(11) **EP 1 134 993 B1**
(45) Date de publication et mention de la délivrance du brevet: **27.11.2002**
(21) Numéro de dépôt: 01400679.5
(22) Date de dépôt: 14.03.2001
(51) Int. Cl.: H04Q 7/32, G07F 7/08, G07F 7/10, H04B 1/38

(54) **Téléphone mobile avec lecteur de carte à puce**
Mobiltelefon mit Chipkartenleser
Mobile phone with chip card reader

(30) Priorité: 14.03.2000 FR 0003268
(43) Date de publication de la demande: 19.09.2001
(73) Titulaire: SAGEM S.A., 75015 Paris (FR)
(72) Inventeur: Chambon, François, 75017 Paris (FR); Leheup, M. Jocelyn, 75013 Paris (FR)
(74) Mandataire: Schmit, Christian Norbert Marie

(56) Documents cités:
- EP-A- 0 599 244
- EP-A- 0 626 664
- EP-A- 0 700 194
- WO-A-00/75882
- DE-A- 19 816 575
- US-A- 5 036 461
- US-A- 5 887 266

## Description

La présente invention a pour objet un téléphone mobile perfectionné c'est-à-dire ici capable d'effectuer d'autres opérations que des opérations de téléphonie mobile. A ce titre dans la présente invention, quand on parlera de téléphonie mobile il faudra comprendre en fait un organe susceptible d'envoyer avec les moyens d'un téléphone mobile des messages qui ne seront pas nécessairement des messages de parole mais qui peuvent être des messages de données ou autres.

Le téléphone mobile de l'invention est principalement un téléphone mobile capable d'échanger des informations avec une station de base, et par ailleurs avec un autre organe qu'une station de base. Cet autre organe sera dans la description principalement un support à puce, en particulier une carte à puce. Mais cet autre organe pourrait être également un micro-ordinateur ou autre. Ce micro-ordinateur serait relié au téléphone mobile, notamment par une prise de fond de boîtier, par une liaison infrarouge ou par une liaison radioélectrique permettant un échange de données entre ce micro-ordinateur et le téléphone mobile, et au-delà du téléphone mobile entre le micro-ordinateur et un site distant, notamment un site Internet. Quand le téléphone mobile sera en relation avec une carte à puce, ce téléphone mobile comportera, notamment dans un boîtier de batterie, en particulier amovible, un lecteur de carte à puce dans lequel une carte à puce (ou un support à puce) peut être insérée.

De tels équipements présentent à ce jour plusieurs types de problème. Le premier problème présenté est en général celui des exigences manifestées par un opérateur qui met en service des cartes à puce. Un tel opérateur, par exemple une banque, exige que les lecteurs dans lesquels ces cartes à puce seront insérées pour permettre des interactions avec les services de l'opérateur soient des lecteurs autorisés. Pour aboutir à ce résultat, il a par ailleurs été prévu qu'un jeton à puce contenu dans le téléphone mobile et correspondant à un abonnement de l'utilisateur du téléphone mobile auprès d'un opérateur de téléphonie mobile soit modifié pour incorporer une telle faculté de transaction avec les services de l'opérateur de cartes à puce. En pratique, il a été imaginé que le jeton à puce, dit circuit SIM (Secure Identification Module) possède une faculté de conversation avec les services de l'opérateur de cartes à puce pour permettre au téléphone mobile de jouer le rôle de lecteur (de lecteur déporté et distant). Une telle démarche présente cependant l'inconvénient que l'opérateur de téléphonie mobile qui met en oeuvre le circuit SIM et les opérateurs de cartes bancaires à puce doivent se mettre d'accord sur le protocole de gestion incorporé dans une mémoire programme de ce jeton à puce. Cet accord n'est pas facile à obtenir car notamment les opérateurs bancaires sont méfiants. En plus cet accord doit être réitéré autant de fois que l'opérateur bancaire sera différent. Dans la pratique les réticences à l'utilisation d'un tel système sont tels qu'il ne se met pas vraiment en place.

Le document US-A-5 887 266 décrit un téléphone mobile comportant un microprocesseur effectuant la gestion physique des circuits de télécommunications du téléphone mobile, un deuxième microprocesseur pour gérer des signaux d'abonnement l'utilisation de ce téléphone mobile sur un réseau de téléphonie mobile, ainsi qu'une pluralité de supports à puce étant adaptés à recevoir des puces munies de microprocesseurs.

Un autre problème présenté par ce type de solution est que le lecteur de cartes à puce constitué par le téléphone mobile n'est bien entendu pas apte à ne lire qu'un seul type de cartes à puce. Il devrait être capable d'en lire plusieurs. Eventuellement même, pour un même type de cartes à puce, le lecteur devrait être capable d'évoluer c'est-à-dire de fournir des fonctions de plus en plus perfectionnées en tenant compte des évolutions de cartes à puce elles-mêmes. La gestion des jetons à puce et des autorisations qu'ils contiennent devient alors quasiment inextricable. Et cette gestion est une deuxième raison de l'insuccès du système.

Les exigences imposées par les opérateurs qui gèrent les cartes à puce sont différentes de celles imposées par les opérateurs de téléphonie mobile qui ne s'intéressent qu'à la durée des communications. On note en particulier la nécessité de transmettre un numéro de lecteur ainsi qu'un type de lecteur et ou de carte à puce insérée pour permettre aux services de l'opérateur bancaire de déclencher un type d'opération ou un autre en fonction d'un souhait manifesté par ailleurs par l'utilisateur. Pour simplifier, on pourra admettre que selon le type de lecteur, le mode de chiffrage des codes secrets pourra être différent, plus ou moins compliqué, de plus en plus difficile à casser.

Par opposition à une voie technique qui semblait se dessiner de circuit SIM, dit TOOL KIT, dans laquelle un kit de fonctions et d'autorisations permettait justement les transactions avec les opérateurs de carte à puce, l'invention préconise de résoudre le problème différemment. Dans l'invention, on crée dans le téléphone mobile un autre microprocesseur, de préférence amovible sous la forme d'une microcarte (de préférence de même taille que le jeton à puce), et qui entre en relation avec le microprocesseur du téléphone mobile, en concurrence avec le circuit SIM du jeton. Selon l'invention le problème de concurrence à résoudre est résolu en créant alors une préférence d'exécution des ordres par le circuit SIM (le jeton à puce) et, en cas de rejet de l'ordre à exécuter par ce circuit SIM (parce que cet ordre ne lui correspond pas), l'exécution de l'ordre par le microprocesseur ajouté en supplément dans le téléphone mobile.

En résumé, le téléphone mobile entre en relation au moment du démarrage du téléphone mobile en mettant en service le circuit SIM. Lors d'une prise de ligne avec les services d'un opérateur de cartes à puce (une banque), cette banque émet une requête. Cette émission de requête est par exemple effectuée par envoi de messages SMS (short message service - service de messages courts) de classe 2. Cette requête est destinée au téléphone mobile. Elle vise à y activer une application donnée, par exemple à ce que soit communiqué à l'opérateur de carte à puce le numéro du lecteur (dans le téléphone mobile) qui entre en relation avec elle. Cette requête ne fait pas partie des requêtes compréhensibles par le circuit SIM. Celui-ci déroute alors normalement les messages qu'il ne comprend pas vers un stockage de ces messages dans une des mémoires du téléphone mobile.

Dans l'invention, avant ce déroutage, on envoie l'ordre au microprocesseur supplémentaire en lui demandant s'il est capable de l'interpréter et de l'exécuter. Normalement, il est capable de l'interpréter puisque ce microprocesseur supplémentaire a justement été fourni dans ce but par l'opérateur de carte puce bancaire. Ce microprocesseur supplémentaire avertit alors le microprocesseur du téléphone mobile de ce qu'il est capable d'effectuer l'ordre, et la transaction attendue se produit.

En agissant ainsi on résout éminemment le problème des échanges entre les opérateurs de téléphonie mobile et les opérateurs de cartes à puce puisque ceux-ci n'ont plus besoin de se mettre d'accord sur des protocoles de fonctionnement à l'intérieur d'un seul circuit de sécurité. Par ailleurs les diverses opérations utilisables avec une carte à puce sont essentiellement des opérations de paiement ou des opérations dites de tickets électroniques, que ces opérations soient des opérations de paiement pur, des augmentations de crédit ou des débits de porte-monnaie électronique, des opérations instituées en commun avec la banque et certains prestataires de service comme les compagnies aériennes ou autres. Dans ces conditions le microprocesseur supplémentaire sera avantageusement amovible sous forme d'une microcarte. Celle-ci sera associée à la carte à puce pour former un couple avec cette carte qu'elle est censée lire dans un téléphone mobile.

L'invention a donc pour objet un téléphone mobile comportant
- un premier microprocesseur pour effectuer une gestion physique de circuits de télécommunication du téléphone mobile,
- un deuxième microprocesseur pour gérer des signaux d'abonnement permettant l'utilisation de ce téléphone mobile sur un réseau de téléphonie mobile,
- un lecteur de support à puce pour recevoir un support à puce, ce support à puce pouvant être muni d'un troisième microprocesseur,
caractérisé en ce qu'il comporte
- un quatrième microprocesseur pour gérer la communication entre le lecteur de support à puce et le premier microprocesseur, et
- dans une mémoire programme du premier ou du deuxième microprocesseur un programme pour dérouter vers le quatrième microprocesseur des commandes dont l'exécution par le deuxième microprocesseur y a été tentée sans succès.

L'invention sera mieux comprise à la lecture de la description qui suit et à l'examen des figures qui l'accompagnent. Celles-ci ne sont présentées qu'a titre indicatif et nullement limitatif de l'invention. Les figures montrent :
- Figure 1 : la représentation schématique de l'architecture d'un téléphone mobile conforme à l'invention ;
- Figure 2 : des étapes essentielles du procédé mis en oeuvre dans cette architecture de microprocesseurs de l'invention ;
- Figure 3 : une représentation schématique de la circulation des données dans cette architecture de microprocesseurs dans une utilisation de type particulier.

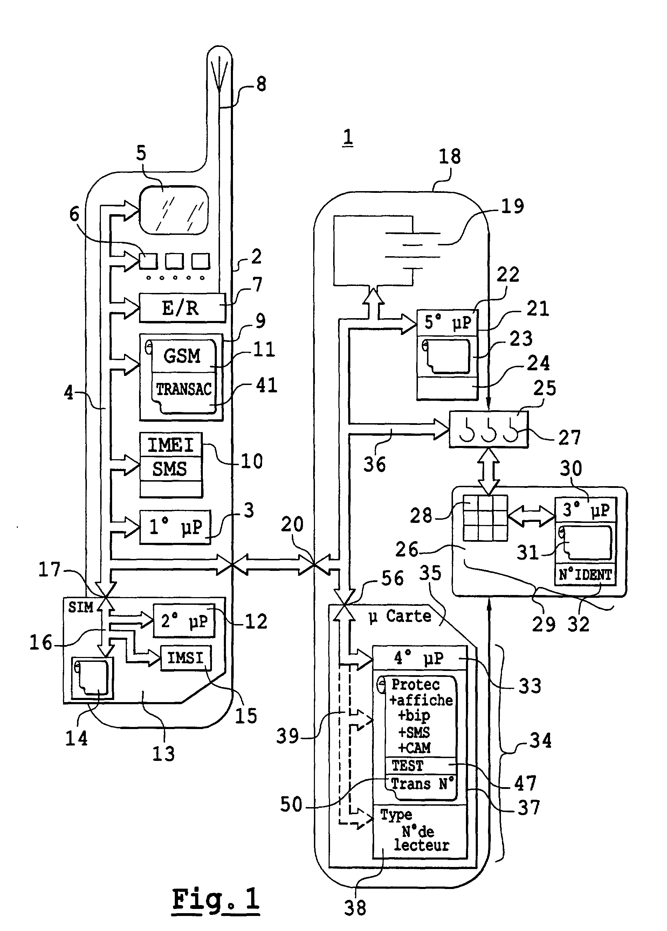

La figure 1 montre un téléphone mobile 1 conforme à l'invention. Ce téléphone mobile 1 comporte, dans un exemple, un boîtier 2 de téléphone mobile comportant les fonctions essentielles du téléphone mobile. Ce boîtier 2 comporte ainsi essentiellement un premier microprocesseur 3 en relation par l'intermédiaire d'un bus 4 de données, de commandes et d'adresses avec un écran de visualisation 5, un clavier 6 de commande du téléphone mobile, et un dispositif d'émission réception 7. Le dispositif 7 d'émission réception est en relation par ailleurs avec un moyen de rayonnement 8 symbolisé ici par une antenne. Le premier microprocesseur 3 est capable d'effectuer une gestion physique des circuits de télécommunication du téléphone mobile, notamment des circuits d'émission/réception 7. Le premier microprocesseur 3 est également capable de traiter ou faire traiter les signaux de paroles ou de données échangés. Dans ce but, il comporte une mémoire programme 9 et une mémoire de données 10. La mémoire programme 9 comporte un programme 11, intitulé ici GSM, pour effectuer une gestion physique des circuits de télécommunication du téléphone mobile 1. En pratique, le programme 11 gère le circuit 7 ainsi que d'autres circuits non montrés, en particulier un processeur de traitement de signal de parole et en réception un décodeur, notamment un décodeur de Viterbi. La mémoire de données 10 comporte des indications relatives au téléphone mobile, notamment un numéro d'identification IMEI, des informations propre à l'utilisation, ainsi que des petits messages courts de service, SMS - Short Message Service, qui ont été reçus.

Le téléphone mobile 1 comporte également un deuxième microprocesseur 12 appelé à gérer des signaux d'abonnement permettant l'utilisation du téléphone mobile 1 avec un réseau de téléphonie mobile (non représenté). A cet effet, le microprocesseur 12 est contenu dans un support 13 à puce, dit couramment SIM, et est en relation interne avec une mémoire programme 14 et une mémoire de données 15 par l'intermédiaire d'un bus interne 16. En pratique les circuits 12, 14, 15 et 16 forment un microcontrôleur intégré sur un seul circuit intégré, lui-même inséré dans le support 13. Le deuxième microprocesseur 12 est en relation avec le microprocesseur 3 par l'intermédiaire du bus 4 et d'une interface, un connecteur, 17.

Le téléphone 1 comporte encore un lecteur 25 de support à puce, en particulier d'une carte à puce 26. Le lecteur 25 est symbolisé ici par des palpeurs 27 destinés à venir au contact de métallisations 28 de la puce 29 du support à puce 26. La puce 29 comporte en particulier un troisième microprocesseur 30 associé à une mémoire programme 31 et à une mémoire de données 32 par un bus interne. La puce 29 a également la forme d'un microcontrôleur avec la particularité toutefois que sa mémoire programme 31 peut être plus facilement programmable. La carte à puce 26 est mise à disposition de l'utilisateur du téléphone mobile 1 par un opérateur de cartes à puce : en pratique une banque, et la carte à puce 26 peut ainsi être une carte de paiement, de télépaiement, un porte-monnaie électronique, ou bien encore une carte apte à mettre en oeuvre une fonction de "electronic ticketting" - carte de ticket électronique, permettant à son utilisateur, notamment dans le cadre d'une utilisation pour des transports aériens, d'effectuer une réservation et de mémoriser dans la mémoire 32 des informations relatives à la réservation de transports effectués et à des points de transports accumulés.

L'invention est principalement caractérisée par la présence d'un quatrième microprocesseur 33 apte à gérer la communication entre le lecteur 25 de support à puce et le premier microprocesseur 3, et plus généralement entre ce lecteur 25 et les circuits d'un opérateur de carte à puce joignable par l'intermédiaire du téléphone mobile 1 et du réseau de téléphonie mobile correspondant à l'opérateur de téléphonie mobile du circuit SIM 13. Sur le plan pratique le quatrième microprocesseur 33 est contenu dans un circuit intégré unique 34 serti dans une microcarte 35. La microcarte 35 est de préférence amovible, dans un boîtier batterie 18 ici, de même façon que la carte SIM 13 est amovible dans le boîtier 2 du téléphone mobile. De préférence la microcarte 35 est mise en communication avec un bus 36 d'interface d'un microcontrôleur 21 avec le bus 4. Mais on pourrait imaginer que la microcarte 35 soit insérée dans le boîtier 2 et soit directement en relation avec le bus 4. La microcarte 35, en particulier si elle doit effectuer des opérations nombreuses et diverses peut comporter plusieurs circuits intégrés, notamment une mémoire programme 37 et une mémoire de données 38. Si le circuit 34 est ainsi constitué de plusieurs circuits chacun d'eux sera en relation, par l'intermédiaire d'un bus 39 avec le bus 36, et/ou le bus 4.

La microcarte 35 est capable de faire mettre en oeuvre par le téléphone mobile 1 des opérations élémentaires d'affichage, de bip du clavier, de composition de messages SMS, et d'envoi de requêtes, notamment de demandes de communications au réseau de téléphonie mobile. Ces fonctions sont les mêmes que celles effectuées par le microprocesseur 12 de la carte 13. Les dialogues entre les microprocesseurs 3 et 33 peuvent de préférence être régis selon le même protocole que ceux échangés entre les microprocesseurs 3 et 12. Ce protocole est connu sous le nom de SIM TOOL KIT et est conforme à la norme GSM 11 14.

Pour son alimentation électrique, le téléphone mobile 1 comporte un boîtier batterie 18 muni d'une batterie 19. Ici le boîtier batterie 1 est amovible. La batterie 19 est reliée par une interface 20 au bus 4. Le boîtier 18 comporte un circuit interface 21 généralement un microcontrôleur, c'est-à-dire un circuit intégré comportant sur un même circuit intégré un cinquième microprocesseur 22, une mémoire programme 23 (en général non programmable) et une mémoire de données 24 (en général petite). Le cinquième microprocesseur 22 est situé à une interface entre le boîtier 2 du téléphone mobile et le boîtier 18 de batterie. Pour des raisons de commodité de réalisation, le cinquième microprocesseur 22 est placé dans le boîtier 18 de batterie. On pourrait toutefois imaginer qu'il soit placé dans le boîtier 2. Le microprocesseur 22 gère l'alimentation, c'est-à-dire qu'il est capable d'informer le téléphone mobile de l'état de charge de la batterie 19 et, en cours de charge, de requérir la cessation de la charge lorsque la batterie est complètement chargée.

Ainsi constituée, cette architecture de microprocesseurs conduit à disposer d'un microprocesseur esclave, le microprocesseur 3, et de deux microprocesseurs maîtres, le microprocesseur 12 et le microprocesseur 33. Pour éviter le conflit de fonctionnement qui peut en résulter, on prévoit que l'un des microprocesseurs maître qui prend la main informe l'autre d'une manière ou d'une autre de sa prise de commandement du bus, notamment du bus 4.

En ce qui concerne le microprocesseur 12, un tel fonctionnement est conforme à la norme GSM. En effet, le microprocesseur 12 après avoir effectué les opérations de vérification d'abonnement, et notamment d'avoir envoyé à l'opérateur de téléphonie mobile un numéro IMSI incorporé dans sa mémoire 15, se met en veille et laisse le microprocesseur 3 gérer le bus 4. Dans l'invention lorsque le microprocesseur 33 a à intervenir, il commande le microprocesseur 3 par l'intermédiaire du bus 4 et il n'est pas contrarié par le microprocesseur 12 qui est en veille. Lorsque le microprocesseur 12 n'est pas en veille, la mémoire programme du microprocesseur 33 prévoit que ce dernier ne puisse pas tenter de prendre le commandement du bus 4. Ceci est par exemple réalisé dans le microprocesseur 33 par une mesure et un test des signaux présent sur le bus 4.

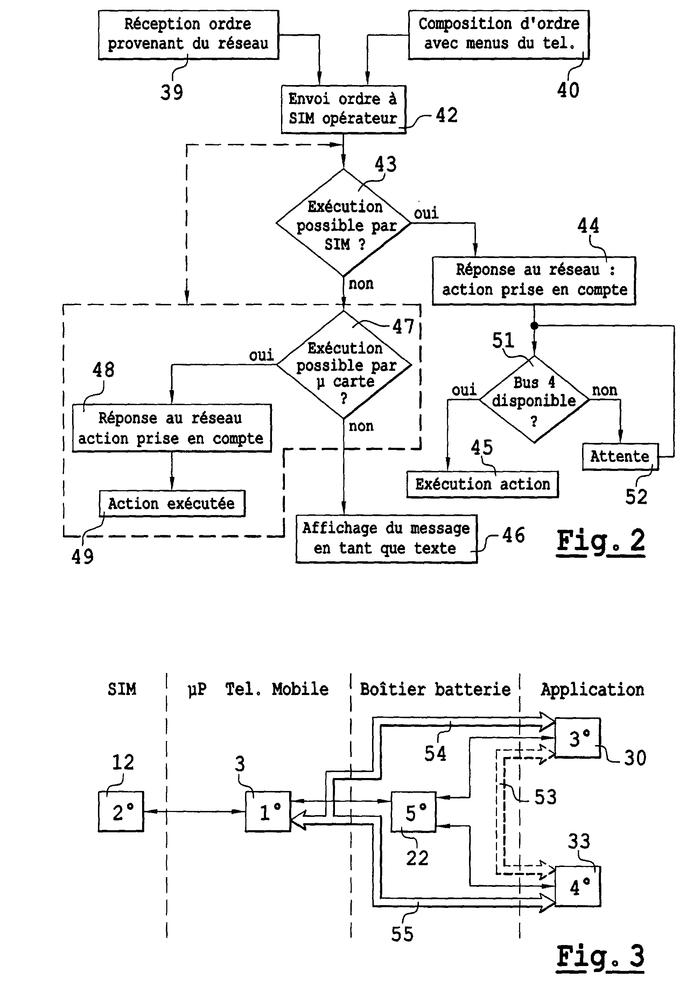

La figure 2 montre la réaction de ce système de microprocesseurs lorsque survient un ordre extérieur. L'ordre extérieur peut provenir du réseau de téléphonie mobile au cours d'une opération de réception 39, ou peut résulter de la composition 40 d'un ordre avec les touches du clavier 6, en application de menus disponibles dans la mémoire programme 9, notamment d'un menu 41 de transactions. Ce menu 41 accueille en pratique, d'une manière générique, un programme de transaction qui lui est contenu dans la mémoire programme 37. L'ordre ainsi disponible est envoyé au microprocesseur 12, en respectant la norme GSM, au cours d'une opération 42. D'une manière connue le microprocesseur 12 lance alors en fonction d'un programme contenu dans la mémoire programme 14, un test 43 pour savoir s'il peut exécuter l'ordre qu'il vient de recevoir. Lorsqu'il peut exécuter l'ordre, il effectue deux opérations. Premièrement en une étape 44, il répond au réseau, ou à l'écran 5 du téléphone mobile, pour dire que l'action est prise en compte et deuxièmement il exécute l'opération au cours d'une étape 45.

Si l'ordre reçu par le circuit SIM 13 n'est pas exécutable par ce dernier, normalement cet ordre est considéré comme un message à afficher en tant que texte au cours d'une opération 46. Dans l'invention, on prévoit alors que le premier microprocesseur 3, ou le deuxième microprocesseur 12, transmettent l'ordre reçu au quatrième microprocesseur 33. Celui-ci effectue alors un test 47, du même type que le test 43 pour savoir si ce quatrième microprocesseur 33 est capable d'exécuter l'ordre reçu. Si l'ordre est destiné à ce quatrième microprocesseur 33, bien entendu il peut l'exécuter et dans ce cas le quatrième microprocesseur 33 envoie, de préférence, une réponse 48 au réseau pour signaler que l'ordre a été reçu. L'étape 48 est suivie d'une étape 49 au cours de laquelle l'action est exécutée. Bien entendu, si le quatrième microprocesseur 33 n'est pas capable d'effectuer l'ordre, c'est qu'il s'agit d'un message à afficher ou à mémoriser dans une des mémoires du téléphone mobile et cette action est entreprise en correspondance.

Dans un exemple particulier, l'ordre reçu comporte un ordre de communication d'un numéro et/ou d'un type de lecteur et/ou d'une carte à puce 26. Cet ordre aboutit donc via l'antenne 8 dans le téléphone mobile 1. Il est normalement appliqué au circuit SIM 13 qui, dans le cas présent ne le reconnaît pas, se remet en veille, et informe le microprocesseur 3 de ce que le message reçu est en principe un texte (auquel aucun message d'acquit de réception n'est à accorder), destiné à être stocké dans une des mémoires du téléphone mobile. Le microprocesseur 3 recevant cette information de rejet envoie alors l'ordre au quatrième microprocesseur 33 pour que celui-ci exécute l'ordre. L'ordre reçu correspond alors à un sous-programme 50 contenu dans la mémoire programme 37 et le quatrième microprocesseur 33 exécute une transmission d'un numéro de lecteur et ou d'un type de lecteur contenus dans la mémoire 38 de la microcarte 35.

Par la suite, dans la transaction, sur une requête émanant de l'opérateur de carte à puce qui suit un même chemin, le quatrième microprocesseur 33 peut faire prélever par le troisième microprocesseur 30 le numéro d'identification de la carte à puce 26 pour le transmettre également en retour à l'opérateur de carte à puce qui l'a requis. Cet opérateur peut alors faire lancer par le quatrième microprocesseur 33 les opérations de vérification de code secret et de validation de paiement connues d'une manière classique. Le téléphone mobile 1 n'intervient alors ici que pour formater le message de paiement validé, constitué selon un format transmissible par le téléphone mobile, et pour le transmettre par le réseau de téléphonie mobile à l'opérateur de carte à puce concerné. Le format préféré est un format SMS. Dans ce cas, le traitement avec les deux tests sera la règle. Toutefois, l'opérateur de carte à puce peut définir un format de transfert de données propre. Dans ce dernier cas, la sollicitation systématique du deuxième microprocesseur 12, à chaque fois, peut être évitée.

Il est possible, alors que cette transaction s'effectue et qu'elle dure une durée non négligeable de plusieurs secondes, qu'un message de type SMS soit reçu par le téléphone mobile parce qu'il lui est envoyé par un autre canal. Dans ce cas, ce message peut être exécutable par le circuit SIM 13 et conduire à une réponse positive du test 43 alors que la tâche effectuée par le quatrième microprocesseur 33 n'est pas terminée. Si par ailleurs, un acquit de réception de ce message n'est pas envoyé au réseau, le réseau sera amené à réitérer l'émission du message SMS jusqu'à ce qu'il soit reçu. Dans ces conditions, pour éviter de surcharger le réseau, alors que l'ordre SMS a été correctement reçu la première fois, on prévoit, avant l'exécution 45 de cet ordre par le deuxième microprocesseur 12 (ce qui implique la gestion du bus 4), d'envoyer par l'étape 44 un acquit au réseau et de tenir compte de l'indisponibilité du bus 4. A cet effet, au cours d'un test 51, la disponibilité du bus 4 est mesurée. Si le bus 4 doit être géré par le quatrième microprocesseur 33 (en exécution par exemple d'une procédure de paiement), le premier microprocesseur 3 met le message SMS en attente mémorisée au cours d'une étape 52 et relance périodiquement l'exécution du test 51 jusqu'à ce que le bus 4 soit libéré. La boucle de disponibilité 51-52 peut de préférence être mise en oeuvre par le microprocesseur 3. Elle peut par ailleurs être exécutée dans le cadre inverse, pour différer l'exécution 49 d'un ordre provenant de l'opérateur de carte à puce alors que le deuxième microprocesseur 12 est en train de traiter un message SMS reçu par le canal SMS.

La figure 3 montre un mode préféré de mise en relation du quatrième microprocesseur 33 avec le troisième microprocesseur 30. Du fait que le quatrième microprocesseur 33 est relié au troisième microprocesseur 30 par une même interface 20, on pourrait penser qu'il serait préférable d'organiser une liaison directe 53 par l'intermédiaire du bus 36 entre le troisième et le quatrième microprocesseur. En pratique une telle liaison n'est pas possible parce que le bus 36 est prévu, notamment par la norme, pour être sous le contrôle du premier microprocesseur 3 et que notamment une liaison 54 entre ce premier microprocesseur 3 et un troisième microprocesseur tel que 30 est déjà prévue par la norme. Aussi dans l'invention, on prévoit en changeant l'adresse, que dans une liaison 55 (empruntant physiquement le même bus 36) le premier microprocesseur 3 entre en relation avec le quatrième microprocesseur 33 (au lieu du troisième microprocesseur 30). Ce changement d'adresse est prévu par le programme de transaction 41 et désigne en pratique une interface 56 ou 25 du bus 36 comportant un connecteur pour recevoir respectivement la microcarte amovible 35 ou la carte à puce 26.

En agissant ainsi, le quatrième microprocesseur 33, jouant le rôle de lecteur, sollicite alors le premier microprocesseur 3 pour que celui-ci fasse lire par le troisième microprocesseur 30 le numéro d'identification 32 de la carte à puce 26. En aucun cas ne circule sur le bus 54 des signaux autres que ceux qui circulent à l'extérieur d'une carte à puce, entre elle et un lecteur classique. En effet, vu de la carte à puce 26, le couple premier microprocesseur 3 - quatrième microprocesseur 33 est perçu comme un lecteur classique et la sécurité de la carte à puce 26 n'est pas amoindrie.

Au besoin, il est possible que certaines actions soient lancées classiquement par le deuxième microprocesseur 12 à destination du troisième microprocesseur 30. On peut alors prévoir dans l'invention que ces ordres, quels qu'ils soient, soient en fait acheminés par le premier microprocesseur 3 au quatrième microprocesseur 33 pour que celui-ci les valide, c'est-à-dire les fasse exécuter, ou non, en fonction d'un degré de sécurité qu'ils impliquent. Dans ces conditions, dans le support à puce, le troisième microprocesseur 30 comporte une mémoire programme 31 contenant une application activable par le premier microprocesseur 3, cette application pouvant même en retour contrôler le premier microprocesseur.

En agissant ainsi, l'invention devient alors complètement compatible avec tous les circuits SIM 13, que ceux-ci soient munis ou non d'une faculté dite TOOL KIT permettant d'interroger une carte à puce. Pour la mise à jour du téléphone mobile de l'invention, on comprendra qu'il suffit de changer la microcarte 35 : celle-ci étant munie dans sa mémoire programme 37 de toutes les opérations nécessaires à faire effectuer par la carte 26.

D'une manière alternative aux tests 43 et 47, on peut prévoir de disposer dans le premier microprocesseur 3 de registres d'état pour refléter un état de travail, ou d'occupation, du deuxième ou du quatrième microprocesseur. Dans ce cas, la mémoire programme du premier microprocesseur peut être munie d'un programme pour envoyer un ordre reçu ou composé au deuxième ou au quatrième microprocesseur en fonction de la lecture d'un état d'occupation de ce deuxième et ou de ce quatrième microprocesseur dans ces registres.

## Revendications

1. Téléphone mobile comportant
- un premier microprocesseur (3) pour effectuer une gestion physique de circuits de télécommunication du téléphone mobile,
- un deuxième microprocesseur (12) pour gérer des signaux d'abonnement permettant l'utilisation de ce téléphone mobile sur un réseau de téléphonie mobile,
- un lecteur (25) de support à puce pour recevoir un support (26) à puce, ce support à puce pouvant être muni d'un troisième microprocesseur (30),
**caractérisé en ce qu'**il comporte
- un quatrième microprocesseur (33) pour gérer la communication entre le lecteur de support à puce et le premier microprocesseur, et
- dans une mémoire programme du premier ou du deuxième microprocesseur un programme (41) pour dérouter (43, 47) vers le quatrième microprocesseur des commandes dont l'exécution par le deuxième microprocesseur y a été tentée sans succès.

2. Téléphone selon la revendication 1, **caractérisé en ce qu'**il comporte une mémoire programme (37) du quatrième microprocesseur muni d'un programme (47) pour tester si un ordre reçu du premier microprocesseur est exécutable par ce quatrième microprocesseur.

3. Téléphone selon l'une des revendications 1 ou 2, **caractérisé en ce qu'**il comporte une mémoire programme du premier microprocesseur muni d'un programme pour envoyer un ordre reçu ou composé au deuxième ou au quatrième microprocesseur en fonction d'un état d'occupation de ce deuxième et ou de ce quatrième microprocesseur.

4. Téléphone selon l'une des revendications 1 à 3, **caractérisé en ce qu'**il comporte un support (35) à puce amovible pour contenir le quatrième microprocesseur.

5. Téléphone selon l'une des revendications 1 à 4, **caractérisé en ce que** le quatrième microprocesseur comporte une mémoire de donnée munie d'une information d'identité et ou de type du lecteur de support à puce.

6. Téléphone selon l'une des revendications 1 à 5, **caractérisé en ce qu'**il comporte
- un cinquième circuit, par exemple, un cinquième microprocesseur (22), à une interface entre un boîtier du téléphone mobile et un boîtier batterie pour gérer une alimentation électrique du téléphone mobile

7. Téléphone selon l'une des revendications 1 à 6, **caractérisé en ce que** le programme pour dérouter des commandes vers le quatrième microprocesseur comporte des moyens (55, 54) pour transmettre ces commandes au support à puce.

8. Téléphone selon l'une des revendications 1 à 7, **caractérisé en ce qu'**il comporte
- un troisième microprocesseur (30) dans le support à puce, ce troisième microprocesseur comportant une mémoire programme contenant une application activable par le premier microprocesseur, cette application pouvant contrôler le premier microprocesseur.

9. Téléphone selon l'une des revendications 1 à 8, **caractérisé en ce qu'**il comporte des moyens pour que le premier et le quatrième microprocesseurs dialoguent entre eux selon la norme GSM 11 14.

10. Téléphone selon l'une des revendications 1 à 9, **caractérisé en ce qu'**il comporte dans une mémoire programme un programme pour mémoriser un ordre reçu du réseau, pour vérifier le caractère exécutable de l'ordre reçu et pour envoyer au réseau un message d'acquit si l'exécution de l'ordre est possible.

11. Téléphone selon l'une des revendications 1 à 10, **caractérisé en ce qu'**il comporte dans une mémoire programme un programme pour renvoyer au réseau un message renseignant sur un identifiant de lecteur, et ou une version de ce lecteur, et ou un identifiant du troisième microprocesseur.

12. Téléphone selon l'une des revendications 1 à 11, **caractérisé en ce que** le troisième microprocesseur est contenu dans une microcarte associée en couple avec le support à puce.

13. Procédé de commande d'un téléphone mobile dans lequel
- on effectue à l'aide d'un premier microprocesseur (3) une gestion physique de circuits de télécommunication du téléphone mobile,
- on gère à l'aide d'un deuxième microprocesseur (12) des signaux d'abonnement permettant l'utilisation de ce téléphone mobile sur un réseau de téléphonie mobile,
- on reçoit un support (26) à puce dans un lecteur (25) de support à puce, ce support à puce pouvant être muni d'un troisième microprocesseur (30),
**caractérisé en ce qu'**il comporte les étapes suivantes
- on gère la communication entre le lecteur de support à puce et le premier microprocesseur à l'aide d'un quatrième microprocesseur (33).
- on tente de faire exécuter une commande par le deuxième microprocesseur, et
- on déroute (43, 47) vers le quatrième microprocesseur des commandes dont l'exécution par le deuxième microprocesseur y a été tentée sans succès.

14. Procédé selon la revendication 13, **caractérisé en ce que**
- on mémorise dans une mémoire du téléphone des données dont l'exécution par le quatrième microprocesseur a échoué.

## Patentansprüche

1. Mobiltelefon mit
einem ersten Mikroprozessor (3) zum Einrichten einer physikalischen Steuerung von Telekommunikationsschaltkreisen des Mobiltelefons,
einem zweiten Mikroprozessor (12) zum Steuern von Teilnehmersignalen, die die Nutzung dieses Mobiltelefons in einem Mobiltelefonnetz ermöglichen,
einem Lesegerät (25) für einen Chipträger zum Aufnehmen eines Chipträgers (26), wobei der Chipträger mit einem dritten Mikroprozessor ausgestattet sein kann,
**gekennzeichnet durch**
einen vierten Mikroprozessor (33) zum Steuern der Kommunikation zwischen dem Chipträgerlesegerät und dem ersten Mikroprozessor und
einem Programm (41) in einem Programmspeicher des ersten oder den zweiten Mikroprozessors zum Weiterleiten (43, 47) von Befehlen an den vierten Mikroprozessor, deren Ausführung **durch** den zweiten Mikroprozessor dort ohne Erfolg versucht wurde.

2. Telefon nach Anspruch 1,
**gekennzeichnet durch**
einen Programmspeicher (37) des vierten Mikroprozessors mit einem Programm (47) zum Prüfen, ob eine von dem ersten Mikroprozessor empfangene Anweisung **durch** den vierten Mikroprozessor ausführbar ist.

3. Telefon nach Anspruch 1 oder 2,
**gekennzeichnet durch**
einen Programmspeicher des ersten Mikroprozessors mit einem Programm für das Verschicken einer empfangenen oder erzeugten Anweisung an den zweiten oder vierten Mikroprozessor in Abhängigkeit von einem Belegungszustand des zweiten oder vierten Mikroprozessors.

4. Telefon nach einem der Ansprüche 1 bis 3,
**gekennzeichnet durch**
einen entnehmbaren Chipträger (35), der den vierten Mikroprozessor enthält.

5. Telefon nach einem der Ansprüche 1 bis 4,
**gekennzeichnet durch**
einen Datenspeicher in dem vierten Mikroprozessor mit einer Information über Identität und/oder Typ des Chipträgerlesegerätes.

6. Telefon nach einem der Ansprüche 1 bis 5,
**gekennzeichnet durch**
einen fünften Schaltkreis, beispielsweise einen fünften Mikroprozessor (22) mit einer Schnittstelle zwischen einem Mobiltelefongerät und einem Batteriegerät für das Steuern einer elektrischen Versorgung des Mobiltelefons.

7. Telefon nach einem der Ansprüche 1 bis 6,
**dadurch gekennzeichnet, dass**
das Programm für das Weiterleiten von Befehlen an den vierten Mikroprozessor Mittel (55, 54) umfasst, um diese Befehle an den Chipträger zu übertragen.

8. Telefon nach einem der Ansprüche 1 bis 7,
**gekennzeichnet durch**
einen dritten Mikroprozessor (30) auf dem Chipträger, wobei dieser dritte Mikroprozessor einen Programmspeicher umfasst, der eine **durch** den ersten Mikroprozessor aktivierbare Anwendung enthält, wobei diese Anwendung den ersten Mikroprozessor steuern kann.

9. Telefon nach einem der Ansprüche 1 bis 8,
**gekennzeichnet durch**
Vorrichtungen, um einen Dialog zwischen dem ersten und dem vierten Mikroprozessor untereinander gemäß GSM 11 14 zu ermöglichen.

10. Telefon nach einem der Ansprüche 1 bis 9,
**gekennzeichnet durch**
ein Programm in einem Programmspeicher, um eine Anweisung zu speichern, die aus dem Netz empfangen wurde, um die Ausführbarkeit der empfangenen Anweisung zu verifizieren und um eine Empfangsbestätigung an das Netz abzuschicken, wenn die Ausführung der Anweisung möglich ist.

11. Telefon nach einem der Ansprüche 1 bis 10,
**gekennzeichnet durch**
ein Programm in einem Programmspeicher, um an das Netz eine Nachricht abzuschicken, die Auskunft über eine Identifizierung des Lesegerätes und/oder eine Version des Lesegerätes und/oder eine Identifizierung des dritten Mikroprozessors gibt.

12. Telefon nach einem der Ansprüche 1 bis 11,
**dadurch gekennzeichnet, dass**
der dritte Mikroprozessor enthalten ist in einer Mikrokarte, mit der der Chipträger paarweise zusammenhängt.

13. Verfahren zum Steuern eines Mobiltelefons, bei dem
mit einem ersten Mikroprozessor (3) eine physikalische Steuerung von Telekommunikationsschaltkreisen des Mobiltelefons eingerichtet wird,
mit einem zweiten Mikroprozessor (12) Teilnehmersignale, die die Nutzung dieses Mobiltelefons in einem Mobilnetz ermöglichen, gesteuert werden,
in einem Lesegerät (25) für einen Chipträger ein Chipträger (26) aufgenommen wird, wobei der Chipträger mit einem dritten Mikroprozessor (30) ausgestattet sein kann,
**gekennzeichnet durch** die folgenden Schritte Steuern der Kommunikation zwischen dem Chipträgerlesegerät und dem ersten Mikroprozessor mit einem vierten Mikroprozessor (33),
Versuch der Ausführung eines Befehls **durch** den zweiten Mikroprozessor und
Weiterleiten (43, 47) von Befehlen an den vierten Mikroprozessor, deren Ausführung **durch** den zweiten Mikroprozessor dort ohne Erfolg versucht wurde.

14. Verfahren nach Anspruch 13,
**dadurch gekennzeichnet, dass**
in einem Speicher des Telefons Daten abgespeichert werden, deren Ausführung durch den vierten Mikroprozessor mißlang.

## Claims

1. Mobile telephone comprising
- a first microprocessor (3) for carrying out physical management of telecommunications circuits of the mobile telephone,
- a second microprocessor (12) for managing subscriber connection signals allowing the use of this mobile telephone on a mobile telephone network,
- a chip device reader (25) for receiving a chip device (26), this chip device being capable of being provided with a third microprocessor (30),
**characterised in that** it comprises
- a fourth microprocessor (33) for managing the communication between the chip device reader and the first microprocessor, and
- a programme (41) stored in a programme memory of the first or of the second microprocessor for re-routing (43, 47) commands which the second microprocessor has attempted to execute unsuccessfully to the fourth microprocessor.

2. Telephone according to claim 1, **characterised in that** it comprises a programme memory (37) of the fourth microprocessor provided with a programme (47) for testing if an order received from the first microprocessor can be executed by this fourth microprocessor.

3. Telephone according to one of claims 1 or 2,
**characterised in that** it comprises a programme memory of the first microprocessor provided with a programme for sending an order received or composed to the second or to the fourth microprocessor as a function of a busy state of this second and/or of this fourth microprocessor.

4. Telephone according to one of claims 1 to 3,
**characterised in that** it comprises a detachable chip device (35) for containing the fourth microprocessor.

5. Telephone according to one of claims 1 to 4,
**characterised in that** the fourth microprocessor comprises a data memory provided with information on the identity and/or type of chip device reader.

6. Telephone according to one of claims 1 to 5,
**characterised in that** it comprises
- a fifth circuit, for example a fifth microprocessor (22), at an interface between a unit of the mobile telephone and a battery unit for managing an electrical power supply for the mobile telephone.

7. Telephone according to one of claims 1 to 6,
**characterised in that** the programme for re-routing commands to the fourth microprocessor comprises means (55, 54) for transmitting these commands to the chip device.

8. Telephone according to one of claims 1 to 7,
**characterised in that** it comprises
- a third microprocessor (30) in the chip device, this third microprocessor comprising a programme memory containing an application which can be activated by the first microprocessor, this application being capable of controlling the first microprocessor.

9. Telephone according to one of claims 1 to 8,
**characterised in that** it comprises means so that the first and the fourth microprocessors communicate with one another according to the standard GSM 11 14.

10. Telephone according to one of claims 1 to 9,
**characterised in that** it comprises a programme stored in a programme memory for memorising an order received from the network, for verifying the executable character of the order received and for sending the network a message of acknowledgement if the execution of the order is possible.

11. Telephone according to one of claims 1 to 10,
**characterised in that** it comprises a programme stored in a programme memory for sending back to the network a message providing information about a reader identifier and/or a version of this reader and/or an identifier of the third microprocessor.

12. Telephone according to one of claims 1 to 11,
**characterised in that** the third microprocessor is contained in a micro-card paired with the chip device.

13. Method for operating a mobile telephone in which
- physical management of telecommunications circuits of the mobile telephone is carried out with the aid of a first microprocessor (3),
- subscriber connection signals permitting the use of this mobile telephone on a mobile telephone network are managed with the aid of a second microprocessor (12),
- a chip device (26) is received in a chip device reader (25), this chip device being capable of being provided with a third microprocessor (30),
**characterised in that** it comprises the following steps
- the communication between the chip device reader and the first microprocessor is managed with the aid of a fourth microprocessor (33),
- attempts are made to have a command executed by the second microprocessor, and
- commands which the second microprocessor has attempted to execute unsuccessfully are re-routed (43, 47) to the fourth microprocessor.

14. Method according to claim 13, **characterised in that**
- data which the fourth microprocessor has failed to execute is stored in a memory of the telephone.
